# FASCICULE DE BREVET EUROPEEN

(11) **EP 4 111 089 B1**
(45) Date de publication et mention de la délivrance du brevet: **01.11.2023**
(21) Numéro de dépôt: 21706006.0
(22) Date de dépôt: 23.02.2021
(51) Int. Cl.: F17C 13/04

(54) **DISPOSITIF D'OBSTRUCTION AUTOMATIQUE D'UN CIRCUIT DE REMPLISSAGE D'UN OU PLUSIEURS RÉSERVOIR(S) D'UN FLUIDE**
AUTOMATISCHE SPERRVORRICHTUNG EINES KREISLAUFS ZUM FÜLLEN EINES ODER MEHRERER TANKS MIT EINEM FLUID
AUTOMATIC OBSTRUCTION DEVICE OF A CIRCUIT FOR FILLING ONE OR MORE TANKS WITH A FLUID

(30) Priorité: 24.02.2020 FR 2001793
(43) Date de publication de la demande: 04.01.2023
(73) Titulaire: PLASTIC OMNIUM NEW ENERGIES FRANCE, 69007 Lyon (FR)
(72) Inventeur: BELLEC, Ronan, 1130 BRUXELLES (BE); HUBATZECK, Nicolas, 1130 BRUXELLES (BE); ARYAN, Ammar, 1130 BRUXELLES (BE); CRIEL, Bjorn, 1130 BRUXELLES (BE)
(74) Mandataire: LLR
(86) Numéro de dépôt international: PCT/EP2021/054428
(87) Numéro de publication internationale: WO 2021/170572

(56) Documents cités:
- WO-A1-02/12779
- WO-A1-2013/045043
- WO-A1-2016/156519
- FR-A1- 3 042 254

## Description

L'invention concerne le domaine du stockage et de la distribution de fluides, notamment de fluides sous pression, en particulier le domaine des réservoirs destinés à contenir des carburants pour alimenter en énergie chimique tous matériels fixes ou mobiles (véhicules sur route, fer, mer, air, espace). L'invention concerne plus particulièrement une vanne pour un réservoir d'un fluide, notamment d'un fluide sous pression. L'invention concerne également un dispositif d'obstruction automatique d'un circuit de remplissage d'un ou plusieurs réservoir(s) d'un fluide.

Il est connu, par exemple, des documents FR 3 042 254 A1, WO 2013/045043 A1 ou WO 2016/156519 A1, un système et un procédé d'approvisionnement de gaz sous pression.

Dans les véhicules utilisant plusieurs réservoirs sous pression, par exemple, de deux à douze réservoirs de stockage d'hydrogène comprimé à 700 bar (abrégé en H70 dans la norme ANSI HGV 3.1) ou 350 bar (abrégé en H35 dans la norme ANSI HGV 3.1) ou de stockage de gaz naturel comprimé à 200 bar (abrégé en GNC), chaque réservoir est équipé d'une vanne d'arrêt (« Shut-off valve » en langue anglaise) et, selon les besoins, d'un capteur de température et/ou de pression.

Ces vannes permettent :
- d'isoler les réservoirs de fluide sous pression du circuit de régulation de pression lorsque l'alimentation en fluide n'est pas requise par le véhicule,
- d'alimenter un système de consommation de fluide comme, par exemple, une pile à combustible ou un moteur thermique, lorsque l'alimentation en fluide est requise pour le fonctionnement du véhicule,
- d'effectuer les opérations de remplissage des réservoirs via une interface de remplissage spécifique connectée à une station de remplissage.

Chacun de ces équipements est géré par un calculateur central ou des modules de pilotage gérant tout ou partie de ces équipements. En fonction du nombre de ces équipements, il convient d'ajuster la conception de ces calculateurs à l'application envisagée. Ces équipements ont de plus des interfaces de communication spécifiques qui ne sont pas nécessairement existantes sur les calculateurs déjà présents dans le véhicule. Ces adaptations entraînent soit un surcoût pour concevoir le calculateur au plus juste besoin (développement spécifique), soit un surcoût dû au surdimensionnement nécessaire d'un calculateur générique.

L'invention a notamment pour but de fournir un système comprenant des réservoirs de fluide, notamment sous pression, gérés par un calculateur central, ne nécessitant pas les adaptations mentionnées ci-avant.

A cet effet, l'invention a pour objet une vanne pour un réservoir d'un fluide, notamment d'un fluide sous pression. La vanne comprend au moins une partie d'un capteur, pour mesurer au moins un paramètre caractérisant le fluide, et la vanne est apte à recevoir des informations issues d'un calculateur, externe à la vanne. La vanne comprend en outre un calculateur interne comprenant :
- un premier moyen d'acquisition configuré pour acquérir des données issues du au moins un capteur,
- un moyen de communication apte à communiquer de manière bidirectionnelle avec le calculateur externe, et
- un moyen de pilotage configuré pour prendre en compte des informations reçues du calculateur externe et des données issues du au moins un capteur pour piloter au moins un actionneur de la vanne.

Ainsi, la vanne est rendue autonome, pouvant être adaptée à la gestion de différents équipements, sans nécessiter un ajustement du calculateur externe à la vanne, ou le développement d'interfaces additionnelles coûteuses.

On entend par exemple par partie d'un capteur, un élément sensible du capteur, un boîtier du capteur, une connexion électrique du capteur, un doigt de gant pour capteur (quand le capteur est un capteur de température), etc.

Les fluides dont il est question sont, par exemple, de l'essence, du diesel, de l'hydrogène comprimé, du gaz naturel comprimé, du gaz de pétrole liquéfié (abrégé en GPL) ou du biogaz, par exemple du biométhane.

Suivant d'autres caractéristiques optionnelles de la vanne pour réservoir d'un fluide, prises seules ou en combinaison :
- La vanne est une électrovanne. Ceci permet de commander la vanne au moyen d'une commande électrique.
- Le au moins un actionneur de la vanne est relié au moyen de pilotage par au moins une connexion électrique, et comprend un moyen de mesure d'au moins un paramètre de courant dans la connexion électrique. Ceci permet d'établir un diagnostic de l'état de la vanne sans nécessiter des mesures à distance. Un tel diagnostic est exempt du bruit de fond généré par des mesures à distance. Il est donc plus fiable. La sécurité est donc améliorée.
- Le premier moyen d'acquisition est configuré pour acquérir des données issues d'au moins un capteur associé au réservoir, par exemple un capteur permettant de mesurer l'intégrité du réservoir, comme un capteur à fibre de Bragg, à ultrasons, un accéléromètre, ou un capteur de contrainte.
- Au moins un paramètre mesuré est la température ou la pression, et le premier moyen d'acquisition est configuré pour acquérir des données issues du capteur de température ou de pression. Le capteur de température est, par exemple, une thermistance à coefficient de température négatif (abrégé en CNT) ou un thermomètre à résistance de platine de type Pt100 ou Pt1000.
- L'acquisition des données issues du capteur de température et/ou du capteur de pression est gérée par une interface de communication analogique ou numérique, par exemple, une interface LIN (pour « Local Interconnect Network » en langue anglaise), une interface SENT (pour « Single Edge Nibble Transmission » en langue anglaise), une interface CAN (pour « Controller Area Network » en langue anglaise), une interface FlexRay ou une interface Ethernet.
- Au moins un paramètre mesuré est la température, et le premier moyen d'acquisition est configuré pour acquérir des données issues du capteur de température.
- La communication entre le calculateur externe et la vanne est faite via un module de communication utilisant une interface de type CAN, FlexRay ou LIN.
- Le pilotage de l'actionneur de la vanne est assuré par un moyen de pilotage qui agit sur un actionneur de la vanne, par exemple, un solénoïde fonctionnant à courant continu constant ou pulsé, par exemple, par PWM (pour « Pulse Width Modulation » en langue anglaise). Alternativement, le solénoïde fonctionne en « Peak and Hold ».
- Le calculateur interne comprend un ou plusieurs module(s) de pilotage d'actionneur de la vanne.
- Le calculateur interne comprend un module de calcul permettant de traiter les données du capteur compris au moins en partie dans la vanne, de l'au moins un actionneur de la vanne, et de construire et prendre en compte les informations échangées avec le calculateur externe.
- Le moyen de communication est apte à communiquer au calculateur externe des informations sur l'état du réservoir, telles que le jaugeage, l'intégrité du réservoir, l'état ouvert ou fermé de la vanne, l'intégrité de la vanne, la température dans le réservoir, la pression au sein du réservoir, des informations générales sur le réservoir comme sa date de fabrication, son volume, sa pression nominale de fonctionnement et la nature du fluide sous pression (H35, H70, GNC, ...).
- Le moyen de communication est apte à recevoir et exécuter des requêtes du calculateur externe concernant le réservoir. Ces requêtes sont par exemple une demande de mise à disposition du fluide (pour une pile à combustible ou un moteur thermique par exemple), une requête de remplissage en station, une requête d'isolement des réservoirs en cas d'accident, ou tout autre besoin spécifique.
- Le calculateur interne comprend un deuxième moyen d'acquisition configuré pour acquérir, mémoriser et communiquer des données concernant la durée d'utilisation du réservoir, telles que le temps d'utilisation du réservoir (par exemple le nombre d'années d'utilisation du réservoir) et/ou le nombre de cycles de remplissage du réservoir. En effet, la réglementation limite le temps d'utilisation des réservoirs (quinze ans pour les systèmes de stockage d'hydrogène, vingt ans maximum pour les systèmes de stockage de GNC) et en nombre de cycles de remplissage (5 000 minimum pour les systèmes de stockage d'hydrogène et 15 000 minimum pour les systèmes de stockage de GNC). En général, la limite d'utilisation d'un réservoir est indiquée sur une étiquette apposée sur le réservoir et sur la trappe de remplissage du véhicule équipé de ce réservoir, et par conception afin de garantir que le nombre maximum de cycles de remplissage défini par le fabricant du réservoir est suffisant pour toute la durée de vie du véhicule (quinze ans ou vingt ans). Cette indication visuelle de la limite d'utilisation du réservoir présente l'inconvénient d'être basée sur un support facilement dégradable et facile à ignorer, en sorte que rien n'empêche de continuer les cycles de remplissage au-delà de la limite prescrite. La gestion et la communication des données d'utilisation du réservoir par la vanne au calculateur externe permet de fiabiliser la gestion de cette information et d'empêcher, par exemple, le démarrage du véhicule quand la limite prescrite est atteinte.

L'invention a également pour objet un réservoir comprenant une vanne telle que décrite ci-avant.

L'invention a encore pour objet un système comprenant plusieurs réservoirs tels que décrits ci-avant, ainsi qu'un calculateur externe aux vannes desdits réservoirs. Ainsi, un nombre variable de réservoirs peut être intégré dans le véhicule sans nécessiter un ajustement du calculateur externe aux vannes, ou le développement d'interfaces additionnelles.

Suivant une caractéristique optionnelle du système, les réservoirs sont reliés à au moins un collecteur unique de fluide.

L'invention a également pour objet un procédé de gestion d'un système tel que décrit ci-avant, comprenant les étapes de :
- acquisition par le calculateur interne de données issues du au moins un capteur,
- communication bidirectionnelle avec le calculateur externe,
- prise en compte des informations reçues du calculateur externe et des données issues du au moins un capteur.

Le stockage de fluides, notamment de fluides sous pression, facilement inflammables, est associé à des risques pour la sécurité des utilisateurs. Un des risques majeurs est de remplir un réservoir endommagé, ce qui peut conduire à la rupture et l'explosion du réservoir. Actuellement, ce risque est signalé principalement dans le manuel d'utilisateur du réservoir, manuel qui recommande d'éviter l'utilisation d'un réservoir après un accident, et la nécessité de contrôler le système. Cependant ces consignes ne sont pas toujours respectées et des accidents sont à déplorer. La demanderesse a identifié que la sécurité serait grandement améliorée en empêchant le remplissage d'un réservoir lorsqu'un risque pour la sécurité est détecté.

L'invention vise à fournir un moyen robuste d'empêcher le remplissage d'un réservoir lorsqu'un risque de sécurité est détecté.

A cet effet, l'invention a pour objet un dispositif d'obstruction automatique destiné à obstruer un circuit de remplissage d'un ou plusieurs réservoir(s) d'un fluide, notamment sous pression, de manière au moins partiellement étanche au fluide, de façon à empêcher le remplissage du ou des réservoir(s) lorsqu'un événement prédéterminé se produit, le dispositif d'obstruction automatique comprend :
- au moins un élément mobile, apte à être déplacé entre une position de non-obstruction du circuit de remplissage, dans laquelle le au moins un élément mobile est apte à être positionné de manière à offrir une résistance au fluide compatible avec le remplissage du réservoir, et une position d'obstruction du circuit de remplissage, dans laquelle le au moins un élément mobile est apte à être positionné de manière à offrir une résistance au fluide incompatible avec le remplissage du réservoir,
- au moins un élément de retenue du au moins un élément mobile, apte
   - à retenir le au moins un élément mobile en position de non-obstruction, et
   - à être déformé ou déplacé de manière à permettre le déplacement du au moins un élément mobile vers la position d'obstruction,
- au moins un premier moyen de déplacement non-réversible ou de modification non-réversible du au moins un élément de retenue de manière à permettre le déplacement du au moins un élément mobile vers la position d'obstruction,
le au moins un premier moyen de déplacement non-réversible ou de modification non-réversible étant apte à être contrôlé par un dispositif de contrôle.

Est dit « automatique » un dispositif d'obstruction qui est actionné de façon indépendante de la volonté d'un utilisateur.

Est dit « mobile » un élément dont au moins une partie est apte à se déplacer par rapport au reste du circuit de remplissage selon l'invention. Le déplacement de l'élément mobile peut être un mouvement d'expansion.
On entend par « élément mobile » l'ensemble constitué par l'élément mobile et ses annexes telles qu'une connexion avec le premier moyen de déplacement non-réversible.

L'invention permet alors d'obstruer le circuit de remplissage de façon irréversible afin d'empêcher toute réouverture du circuit sans intervention manuelle par une personne habilitée. Le système du ou des réservoirs est donc plus sûr.

Par ailleurs, l'élément mobile jouant le rôle d'un fusible ne nécessite pas une structure aussi compliquée qu'une vanne traditionnelle. Par conséquent, le dispositif d'obstruction est plus simple à fabriquer et moins coûteux.

Suivant d'autres caractéristiques optionnelles du dispositif d'obstruction automatique, prises seules ou en combinaison :
- Le au moins un élément mobile est apte à être positionné au moins en partie dans au moins une portion du dispositif d'obstruction automatique, portion destinée à être assemblée de manière étanche au circuit de remplissage, au moins un orifice est situé dans au moins une paroi de la au moins une portion du dispositif d'obstruction automatique, le au moins un orifice est apte :
   - à être scellé de manière étanche audit fluide par le au moins un élément de retenue du au moins un élément mobile, et
   - à laisser passer le au moins un élément mobile dans la au moins une portion, pour que le au moins un élément mobile puisse atteindre la position d'obstruction. Ceci permet au dispositif d'obstruction automatique d'être assemblé de manière étanche à n'importe quel circuit de remplissage.
- L'événement prédéterminé est une détection d'un défaut de sécurité d'au moins un des réservoirs. Ceci permet d'empêcher le remplissage du ou des réservoir(s) défectueux.
- Le au moins un élément mobile et le au moins un élément de retenue forment un seul et même élément. Ceci permet de simplifier la construction du dispositif d'obstruction automatique en limitant le nombre de ses composants.

Dans un mode de réalisation, l'élément mobile est une enveloppe apte à gonfler sous la pression d'un deuxième fluide. L'élément mobile constitue également l'élément de retenue, qui à l'état non gonflé est retenu en position de non-obstruction. Il est assemblé au niveau de l'orifice de telle façon qu'il le scelle de manière étanche au fluide, et est déformé de manière à permettre le déplacement de l'élément mobile vers la position d'obstruction. Dans ce mode de réalisation, le premier moyen de déplacement non-réversible est un appareil producteur du deuxième fluide (par exemple une pompe à eau).

Dans un autre mode de réalisation, l'élément mobile et l'élément de retenue forment un seul et même élément dont la section et le matériau (par exemple du caoutchouc) sont aptes à le retenir dans l'orifice tout en le scellant de manière étanche au fluide. L'élément mobile / élément de retenue est associé à un dispositif de propulsion (le premier moyen de déplacement non-réversible, par exemple un moyen de propulsion pyrotechnique), qui permet son déplacement vers la position d'obstruction. Dans une variante de réalisation, l'élément mobile / élément de retenue est associé à un actionneur (le premier moyen de déplacement non-réversible, par exemple la tige d'un vérin), qui permet son déplacement vers la position d'obstruction.

L'invention a également pour objet un circuit de remplissage d'un ou plusieurs réservoir(s) d'un fluide, notamment sous pression, comprenant un dispositif tel que décrit ci-avant.

Ainsi, le circuit de remplissage des réservoirs est mis hors service de façon indépendante de la volonté d'un utilisateur, limitant ainsi grandement les risques de remplissage non désirable des réservoirs. Le dispositif d'obstruction automatique peut permettre de gérer des problèmes de sécurité liés à la survenue d'un accident ou en cas d'atteinte de la durée maximum d'utilisation des réservoirs et/ou du nombre maximum de cycles de remplissage du réservoir.

De préférence, le ou les réservoir(s) sont connecté(s) de manière étanche au circuit de remplissage. Ceci permet de remplir le ou les réservoir(s) sous pression de fluide, par exemple d'hydrogène ou de GNC.

De préférence, la au moins une portion du dispositif d'obstruction automatique est disposée dans le circuit de remplissage et assemblée de manière étanche au circuit de remplissage. Ceci permet de fabriquer une portion du dispositif d'obstruction automatique séparément du circuit de remplissage et de l'assembler à ce dernier ultérieurement.

Alternativement, la au moins une portion du dispositif d'obstruction automatique est une portion du circuit de remplissage. Ceci permet de fabriquer ensemble, en une seule pièce, une portion du dispositif d'obstruction automatique et une portion du circuit de remplissage.

Dans la position de non-obstruction du circuit de remplissage, le circuit de remplissage offre une résistance minimale au passage du fluide, compatible avec le remplissage des réservoirs.

De façon optionnelle, le dispositif d'obstruction automatique comporte en outre au moins un second moyen de déplacement du au moins un élément mobile vers la position d'obstruction lorsque le au moins un élément mobile a été libéré du au moins un élément de retenue.

De préférence, le déplacement du au moins un élément mobile est dans une direction sensiblement transversale à une direction longitudinale de ladite au moins une portion du dispositif d'obstruction automatique.

De façon avantageuse, le dispositif d'obstruction automatique comprend en outre au moins un élément de verrouillage dans la position d'obstruction du au moins un élément mobile.

Le circuit de remplissage comprend une vanne pour chaque réservoir, comprenant elle-même un tuyau d'entrée en amont de la vanne, et un tuyau de sortie en aval de la vanne. Le au moins un orifice dans au moins une paroi du dispositif d'obstruction automatique peut être localisé dans les tuyaux d'entrée en amont des vannes, dans une canalisation dédiée au remplissage située en amont des tuyaux d'entrée des vannes, dans une interface de remplissage du circuit de remplissage connectée à une station de remplissage, ou dans des tuyaux de sortie en aval de la vanne. La station de remplissage ne fait pas partie du circuit de remplissage au sens de l'invention.

Les termes « aval » et « amont » sont à considérer selon la position dans le circuit de remplissage. Une position proche de la station de remplissage est qualifiée par « amont » et une position plus proche du réservoir est qualifiée par « aval ».

De façon avantageuse, le au moins un orifice est situé dans au moins une paroi latérale de la au moins une portion du dispositif d'obstruction automatique.

De façon optionnelle, le dispositif d'obstruction automatique comprend en outre un guide, par exemple un corps creux, dans lequel le au moins un élément mobile peut être déplacé pour passer de la position de non-obstruction à la position d'obstruction.

De façon avantageuse, le second moyen de déplacement est un élément élastique agissant entre l'élément mobile et une surface d'appui distale du guide. Les termes « distal » et « proximal » sont à considérer selon la position par rapport au circuit de remplissage. Une position proche du circuit est qualifiée de « proximale » par rapport à une position plus éloignée qui est qualifiée de « distale ».

Avantageusement, la au moins une portion du dispositif d'obstruction automatique dans laquelle est situé le au moins un orifice, comprend au moins un dégagement agencé en regard du au moins un orifice, de façon diamétralement opposée au au moins un orifice, dégagement dans lequel le au moins un élément mobile peut venir en partie se loger en position d'obstruction.

Le au moins un élément mobile du au moins un dispositif d'obstruction automatique peut être ramené de la position d'obstruction à la position de non-obstruction, sous l'action d'un outil de déverrouillage. L'utilisation d'un tel outil peut nécessiter une habilitation. Ainsi, sous réserve des vérifications nécessaires, les réservoirs peuvent être à nouveau remplis et utilisés.

L'invention a également pour objet un ensemble d'un circuit de remplissage d'un ou plusieurs réservoir(s) d'un fluide tel que décrit ci-avant, du ou des réservoir(s) et d'un dispositif de contrôle.

Le dispositif de contrôle peut être un calculateur ou un système mécanique changeant d'état par exemple en raison de son vieillissement, du temps d'utilisation, ou du nombre de cycles d'utilisation.

Le calculateur peut être un calculateur central, externe aux vannes, ou un calculateur interne à chaque vanne.

L'invention a également pour objet un procédé de mise en sécurité d'un ou plusieurs réservoir(s) d'un fluide faisant partie d'un ensemble tel que décrit ci-avant, comprenant les étapes de :
- prise en compte par le dispositif de contrôle d'une information de défaut de sécurité d'au moins un des réservoirs,
- transmission par le dispositif de contrôle d'un ordre d'obstruction au au moins un dispositif d'obstruction,
- prise en compte de l'ordre par le au moins un dispositif d'obstruction,
- passage du au moins un dispositif d'obstruction automatique de la position de non-obstruction à la position d'obstruction.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est un schéma fonctionnel d'une vanne selon un mode de réalisation et d'un calculateur externe à la vanne,
[Fig. 2] la figure 2 est une vue schématique de côté de la vanne de la figure 1 et d'une partie d'un réservoir auquel elle est destinée, un dispositif d'obstruction automatique du circuit de remplissage selon un mode de réalisation d'un autre objet de l'invention étant positionné dans le tuyau d'entrée en amont de la vanne;
[Fig. 3] la figure 3 est une vue schématique d'un système comprenant plusieurs réservoirs selon un mode de réalisation de l'invention,
[Fig. 4] la figure 4 est une vue schématique d'un circuit de remplissage de réservoir(s) d'un fluide selon un mode de réalisation de l'invention, dans lequel le dispositif d'obstruction automatique est en position de non-obstruction,
[Fig. 5] la figure 5 est une vue schématique du même circuit de remplissage avec le dispositif d'obstruction automatique en position d'obstruction,
[Fig. 6] la figure 6 est une vue schématique d'une vanne d'un circuit de remplissage selon un mode de réalisation de l'invention dans lequel le dispositif d'obstruction automatique est positionné dans une canalisation dédiée au remplissage située en amont du tuyau d'entrée de la vanne,
[Fig. 7] la figure 7 est une vue schématique d'un circuit de remplissage selon un mode de réalisation de l'invention dans lequel le dispositif d'obstruction automatique est positionné dans une interface de remplissage du circuit de remplissage connectée à une station de remplissage.
[Fig. 8] la figure 8 est une vue schématique d'un circuit de remplissage de réservoir(s) d'un fluide selon un autre mode de réalisation de l'invention, dans lequel le dispositif d'obstruction automatique est en position d'obstruction,
[Fig. 9] la figure 9 est une vue schématique d'un circuit de remplissage de réservoir(s) d'un fluide selon un autre mode de réalisation de l'invention, dans lequel le dispositif d'obstruction automatique est en position de non-obstruction.

### Description détaillée

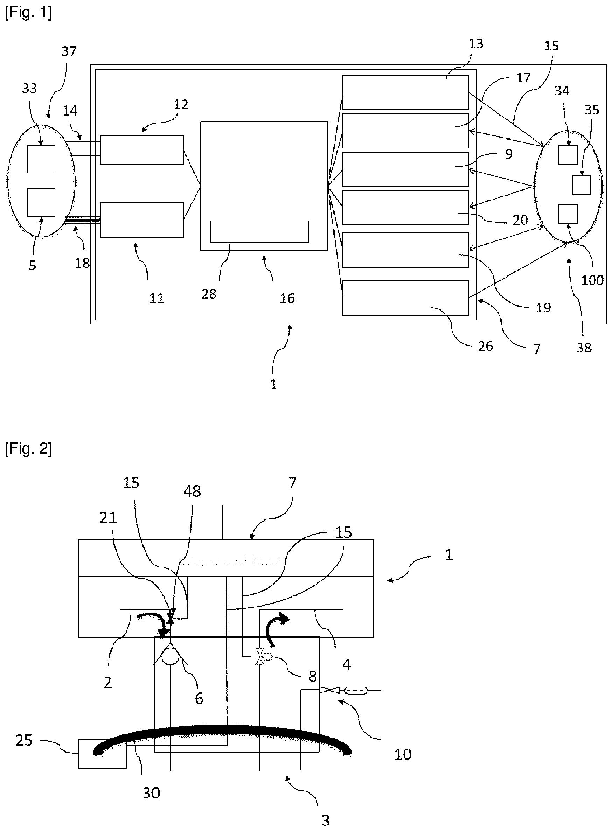

On a représenté sur la figure 1 les solutions techniques d'une vanne 1 selon l'invention. La figure 2 est une représentation schématique de la vanne 1 pour un réservoir 3 d'un fluide, notamment sous pression, par exemple, de l'hydrogène comprimé, dont seule l'extrémité supérieure 30 est représentée. La vanne 1 fait partie d'un circuit de remplissage, non représenté, du réservoir d'un véhicule, non représenté. La vanne 1 est une électrovanne reliée en entrée à un tuyau 2 d'entrée dans la vanne 1, et à un tuyau de sortie 4 de la vanne 1, connectés respectivement dans la vanne 1 à une vanne d'entrée 6, et en sortie à une vanne de sortie 8. La vanne 1 comprend également un dispositif 10 de décompression TPRD (« Thermal and Pressure Release Device » en langue anglaise). La vanne 1 comprend au moins un capteur compris au moins en partie dans la vanne 1 pour mesurer au moins un paramètre caractérisant le fluide. Dans ce mode de réalisation, le capteur est un capteur 35 de température et le paramètre mesuré est la température du fluide. La vanne 1 est apte à recevoir des informations issues d'un calculateur 5 externe à la vanne 1. La vanne 1 comprend au moins un actionneur 100 et un calculateur interne 7 qui comprend un bloc 12 d'alimentation électrique du calculateur interne 7 et du au moins un actionneur 100 de la vanne 1. Le bloc 12 d'alimentation électrique est alimenté en électricité par une batterie 33 du véhicule par le biais de fils de connexion électrique 14. Le calculateur externe 5 ainsi que la batterie 33 font parties du périmètre technique 37 du véhicule tandis que le capteur 35 de température et l'actionneur 100 font parties du périmètre technique 38 de la vanne 1. Le calculateur interne 7 comporte une unité centrale 16 qui comprend un microprocesseur 28, ainsi que les modules suivants :
- un premier moyen 9 pour acquérir des données issues du au moins un capteur,
- un moyen 11 de communication pour communiquer de manière bidirectionnelle avec le calculateur externe 5,
- un moyen 13 de pilotage configuré pour prendre en compte des informations reçues du calculateur externe 5 et des données issues du au moins un capteur pour piloter au moins un actionneur 100 de la vanne 1. Dans ce mode de réalisation, l'actionneur 100 est un solénoïde et le moyen 13 de pilotage agit sur le solénoïde fonctionnant à courant continu constant et, dans une variante, à courant continu pulsé (Peak and Hold).

Dans ce mode de réalisation, le moyen 11 de communication avec le calculateur externe 5 est un module utilisant une interface de type CAN, FlexRay ou LIN. Le module 11 et le calculateur externe 5 sont reliés entre eux par une connexion 18.

Le au moins un actionneur 100 est relié au moyen 13 de pilotage par au moins une connexion électrique 15. Dans le mode de réalisation représenté sur les figures 1 à 3, l'unité centrale 16 comporte également :
- un moyen 17 de mesure d'au moins un paramètre de courant dans la connexion électrique 15,
- un deuxième moyen 19 pour acquérir, mémoriser et communiquer des données concernant la durée d'utilisation du réservoir 3, telles que le temps d'utilisation du réservoir 3 et/ou son nombre de cycles de remplissage,

- un troisième moyen 20 pour acquérir des données d'un autre capteur compris au moins en partie dans la vanne 1, pour mesurer au moins un paramètre caractérisant le fluide ; dans ce mode de réalisation, cet autre capteur est un capteur 34 de pression du fluide, et
- un moyen 26 de commande d'un dispositif 21 apte à obstruer le circuit de remplissage du réservoir, ici au niveau du tuyau d'entrée de la vanne 1, lorsqu'un risque de sécurité est détecté. Le dispositif 21 fait également l'objet de l'invention. Le tuyau d'entrée 2 comprend un orifice 48, apte à laisser passer un élément mobile du dispositif 21, non représenté ici, dans le tuyau d'entrée 2 de la vanne 1.

Dans ce mode de réalisation, le deuxième moyen 19 d'acquisition est également configuré pour acquérir des données issues au moins d'un capteur 25 associé au réservoir 3, permettant de mesurer l'intégrité de celui-ci. Il s'agit par exemple d'un capteur permettant de mesurer l'intégrité du réservoir, comme un capteur à fibre de Bragg, à ultrasons, un accéléromètre, ou un capteur de contrainte.

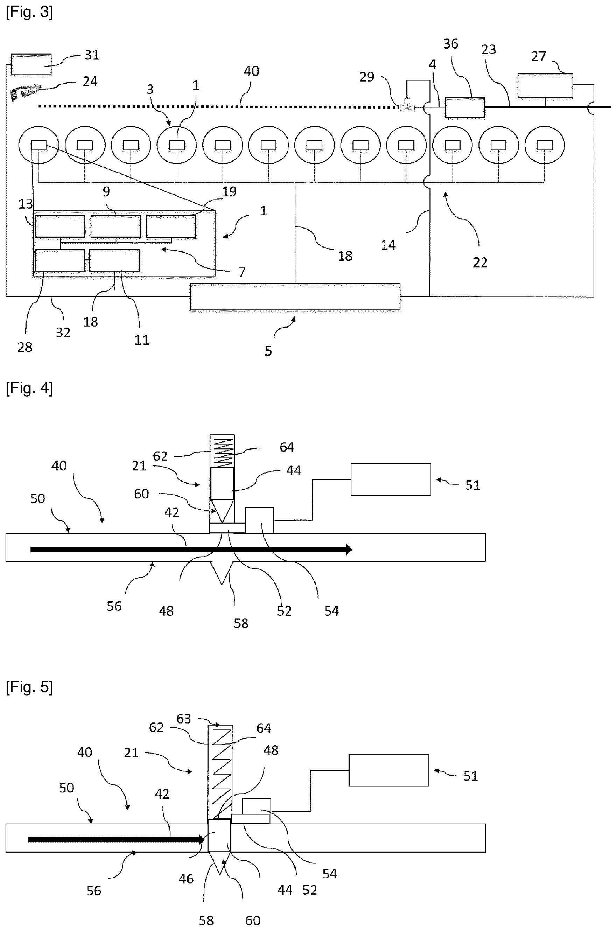

La figure 3 représente un système 22 selon l'invention, comprenant dans ce mode de réalisation une goulotte de remplissage 24, une vanne de sécurité 29 et douze réservoirs 3 de fluide, chacun équipé d'une vanne 1 selon l'invention. Chaque vanne 1 comporte, comme représenté en figure 2, une vanne de sortie 8. La vanne de sortie 8 est une électrovanne commandée par au moins un actionneur 100 piloté par le moyen 13 de pilotage du calculateur interne 7. Le tuyau de sortie 4 de la vanne de sortie 8 met le réservoir 3 en communication fluidique avec un collecteur 23 unique de fluide, par le biais du circuit de remplissage 40 et de la vanne de sécurité 29. Le collecteur 23 est équipé d'un régulateur de pression 36 et d'un capteur de pression de sécurité 27, son rôle est de guider le fluide vers le système de consommation de fluide du véhicule, non représenté, par exemple, une pile à combustible ou un moteur thermique. La vanne de sécurité 29 est une électrovanne reliée au régulateur de pression 36, elle est commandée par le calculateur externe 5 et permet d'isoler le circuit de remplissage 40 du collecteur 23 pendant le remplissage des réservoirs. La vanne de sécurité 29 permet aussi d'isoler le circuit de remplissage 40 du collecteur 23 quand le collecteur 23 présente une défaillance, par exemple, une fuite. La goulotte de remplissage 24 est raccordée au circuit de remplissage 40 et permet, par le biais des tuyaux d'entrée 2, de remplir les réservoirs 3 de fluide à la station de remplissage. Un dispositif de communication infrarouge 31 associé à la goulotte de remplissage 24 permet au calculateur externe 5 de communiqué des informations à la station de remplissage, par le biais d'une connexion électrique 32. Les informations communiquées sont, par exemple, la pression, la température et le volume des réservoirs.

Les figures 4 et 5 représentent de façon schématique un circuit de remplissage 40 d'un ou plusieurs réservoir(s) d'un fluide. La flèche 42 symbolise le flux de fluide lors de l'alimentation du circuit de remplissage 40 en fluide. Le circuit de remplissage 40 comprend un dispositif d'obstruction automatique 21 apte à obstruer le circuit de remplissage 40 de manière au moins partiellement étanche au fluide, de façon à empêcher le remplissage du ou des réservoir(s). Le dispositif d'obstruction automatique 21 comprend au moins un élément mobile 44, apte à être déplacé entre une position de non-obstruction du circuit de remplissage, représentée sur la figure 4, dans laquelle le au moins un élément mobile 44 est positionné de manière à offrir une résistance au fluide compatible avec le remplissage du réservoir, et une position d'obstruction du circuit de remplissage 40, représentée en figure 5, dans laquelle le au moins un élément mobile 21 est positionné au moins en partie dans au moins une portion 46 du circuit de remplissage 40, de manière à offrir une résistance au fluide incompatible avec le remplissage du réservoir, ce qui est symbolisé sur la figure 5 par l'arrêt de la flèche 42 avant cette portion 46 du circuit de remplissage 40.

Le circuit de remplissage 40 comprend également au moins un orifice 48 situé dans au moins une paroi 50 de la au moins une portion 46 du circuit de remplissage 40, apte à laisser passer le au moins un élément mobile 44 dans le circuit de remplissage 40, pour que le au moins un élément mobile 44 puisse atteindre la position d'obstruction. Dans ce mode de réalisation, la paroi 50 dans laquelle l'orifice 48 est situé, est une paroi latérale de la portion 46 du circuit de remplissage 40.

Le dispositif d'obstruction automatique 21 comporte en outre :
- au moins un élément de retenue 52 du au moins un élément mobile 44, apte
   - à retenir l'élément mobile 44 en position de non-obstruction,
   - à sceller de manière étanche audit fluide ledit au moins un orifice 48, et
   - à être déformé ou déplacé de manière à permettre le déplacement du au moins un élément mobile 44 vers la position d'obstruction,
- au moins un premier moyen 54 de déplacement non-réversible ou de modification non-réversible du au moins un élément de retenue 52 de manière à permettre le déplacement du au moins un élément mobile 44 uniquement vers la position d'obstruction,
le au moins un premier moyen 54 de déplacement non-réversible ou de modification non-réversible étant apte à être contrôlé par un dispositif de contrôle 51.

Dans le mode de réalisation des figures 4 et 5, la portion 46 du circuit de remplissage 40 dans laquelle est situé l'orifice 48 comprend dans la paroi 50 un dégagement 58 agencé en regard de l'orifice 48, de façon diamétralement opposée à l'orifice 48, dégagement 58 dans lequel l'élément mobile 44 peut venir au moins en partie se loger en position d'obstruction. Le dégagement 58 constitue un siège de réception de l'extrémité libre 60 de l'élément mobile 44.

Dans le mode de réalisation des figures 4 et 5, le dispositif d'obstruction automatique 21 comprend en outre un guide 62 qui est un corps creux comprenant une surface d'appui distale 63. L'élément mobile 44 est déplacé dans le guide 62 pour passer de la position de non-obstruction à la position d'obstruction. Le dispositif d'obstruction automatique 21 comporte en outre un second moyen 64 de déplacement de l'élément mobile 44 vers la position d'obstruction lorsque celui-ci a été libéré de l'élément de retenue 52. Le second moyen 64 de déplacement représenté sur les figures 4 et 5 est un élément élastique, plus précisément un ressort, qui agit entre l'élément mobile 44 et la surface d'appui distale 63.

Dans les figures 4 et 5, le déplacement de l'élément mobile 44 est effectué dans une direction sensiblement transversale à la direction longitudinale de la portion 46 du circuit de remplissage 40 dans laquelle est situé l'orifice 48.

Le dispositif d'obstruction automatique 21 comprend en outre un élément de verrouillage dans la position d'obstruction, non représenté.

L'élément mobile 44 peut être déplacé entre la position d'obstruction et la position de non-obstruction sous l'action d'un outil de déverrouillage, non représenté.

Par souci de simplification, l'élément mobile, l'élément de retenue et le premier moyen de déplacement non-réversible du dispositif d'obstruction automatique 21 ne sont pas représentés dans les modes de réalisation des figures 2, 6 et 7.

Dans le mode de réalisation de la figure 2, l'orifice 48 du circuit de remplissage 40 est localisé dans le tuyau d'entrée 2 en amont de la vanne 1. Le dispositif de contrôle 51 est le calculateur interne 7 de la vanne 1.

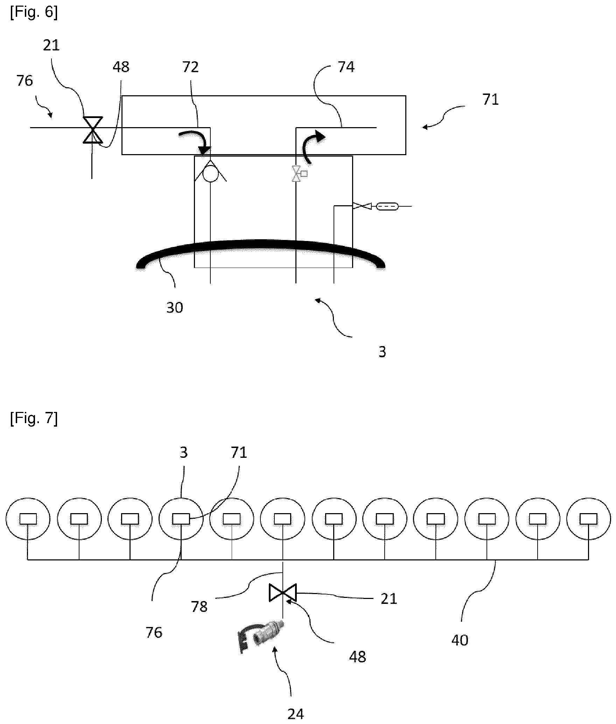

Dans le mode de réalisation de la figure 6, l'orifice 48 du circuit de remplissage 40 est localisé dans une canalisation 76, par exemple, dédiée au remplissage, située en amont du tuyau d'entrée 72 d'une vanne 71 de l'état de la technique. Le dispositif de contrôle 51 est un calculateur externe à la vanne, non représenté. Dans un autre mode de réalisation, en tous points similaire à ce mode de réalisation, la vanne pourrait être la vanne selon l'invention, comprenant un calculateur interne.

Dans le mode de réalisation de la figure 7, l'orifice 48 du circuit de remplissage 40 est localisé dans une interface 78 de remplissage du circuit de remplissage 40, qui est connectée à la station de remplissage, non représentée, par le biais de la goulotte de remplissage 24. Dans un autre mode de réalisation, en tous points similaire à ce mode de réalisation, la vanne pourrait être la vanne selon l'invention, comprenant un calculateur interne. L'ensemble des réservoirs et du calculateur externe constitue dans ce mode de réalisation un système au sens de l'invention.

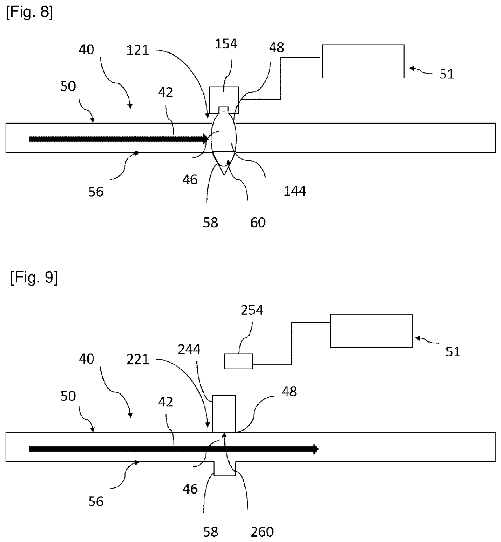

La figure 8 représente un mode de réalisation du circuit de remplissage selon l'invention, se distinguant du mode de réalisation des figures 4 et 5 en ce que l'élément mobile 144 du dispositif d'obstruction automatique 121 est une enveloppe qui est représentée sur la figure 8 gonflée sous la pression d'un fluide non compressible, par exemple de l'eau. Elle est en communication avec une pompe à eau 154, placée sous le contrôle du dispositif de contrôle 51 ; la pompe à eau pourrait être remplacée par un autre dispositif d'injection de fluide, par exemple, un piston. La pompe à eau 154 constitue un premier moyen de déplacement non-réversible au sens de l'invention. En position de non-obstruction, non représentée, le volume de l'enveloppe 144 est très faible. L'enveloppe 144 est située à l'extérieur du circuit de remplissage 40. Lorsque la pompe à eau 154 est mise en action, l'enveloppe 144 subit un mouvement d'expansion qui permet son déplacement de la position de non-obstruction vers la position d'obstruction représentée en figure 8. Dans ce mode de réalisation, l'élément mobile 144 constitue également l'élément de retenue, car à l'état non gonflé, il est retenu en position de non-obstruction. Alternativement, l'eau pourrait être remplacé par une huile, par exemple, de l'huile moteur.

En variante, le fluide pourrait être compressible, comme par exemple de l'air ou un autre gaz comme du dioxyde de carbone ou de l'azote. Dans cette variante, l'enveloppe 144 pourrait être l'enveloppe d'un « mini airbag » gonflé par le gaz injecté par une réaction chimique.

La figure 9 représente un mode de réalisation du circuit de remplissage selon l'invention, se distinguant du mode de réalisation des figures 4 et 5 en ce que l'élément mobile 244 du dispositif d'obstruction automatique 221 est une pièce dont la section et le matériau, ici du caoutchouc, permettent de la retenir dans l'orifice 48, à l'extérieur du circuit de remplissage 40, tout en scellant cet orifice 48 de manière étanche au fluide. L'activation d'un dispositif pyrotechnique 254 permet de propulser l'élément mobile 244 depuis la position de non-obstruction, représentée sur la figure 9, vers la position d'obstruction, non représentée, dans laquelle l'extrémité libre 260 de l'élément mobile 244 se trouve dans le dégagement 58. L'élément mobile et l'élément de retenue forment un seul et même élément 244 apte à être retenu en position de non-obstruction lorsque le dispositif pyrotechnique 254, qui constitue un premier moyen de déplacement non-réversible au sens de l'invention, n'a pas encore été activé.

L'invention n'est pas limitée aux modes de réalisation présentés et d'autres modes de réalisation apparaîtront clairement à l'homme du métier.

### Liste de références

1 : vanne comprenant un calculateur interne,
2 : tuyau d'entrée dans la vanne,
3 : réservoir,
4 : tuyau de sortie de la vanne,
5 : calculateur externe à la vanne,
6 : vanne d'entrée,
7 : calculateur interne,
8 : vanne de sortie,
9 : premier moyen pour acquérir des données issues d'un capteur,
10 : dispositif de décompression TPRD,
11 : moyen de communication avec le calculateur externe,
12 : bloc d'alimentation électrique,
13 : moyen de pilotage d'actionneur de la vanne,
14 : connexion électrique,
15 : connexion électrique entre la vanne et l'actionneur,
16 : unité centrale,
17 : moyen de mesure d'au moins un paramètre de courant dans la connexion électrique 15,
18 : connexion entre le moyen de communication et le calculateur externe,
19 : deuxième moyen pour acquérir, mémoriser et communiquer des données concernant la durée d'utilisation du réservoir,
20 : troisième moyen pour acquérir des données d'un autre capteur,
21 : moyen pour empêcher le remplissage du réservoir en cas de risque de sécurité (dispositif d'obstruction automatique),
22 : système comprenant plusieurs réservoirs et un calculateur externe,
23 : collecteur unique de fluide,
24 : goulotte de remplissage,
25 : capteur permettant de mesurer l'intégrité du réservoir,
26 : moyen de commande d'un dispositif d'obstruction automatique du circuit de remplissage du réservoir,
27 : capteur de pression de sécurité,
28 : microprocesseur,
29 : vanne de sécurité,
30 : extrémité supérieure du réservoir,
31 : dispositif de communication infrarouge,
32 : connexion électrique,
33 : batterie du véhicule,
34 : capteur de pression,
35 : capteur de température,
36 : régulateur de pression,
37 : périmètre technique du véhicule,
38 : périmètre technique de la vanne,
40 : circuit de remplissage,
42 : flèche symbolisant le flux de fluide dans le circuit de remplissage,
44 : élément mobile,
46 : portion du circuit de remplissage dans laquelle l'élément mobile se positionne en position d'obstruction,
48 : orifice,
50 : paroi de la portion du circuit de remplissage dans laquelle est situé l'orifice,
51 : dispositif de contrôle,
52 : élément de retenue,
54 : premier moyen de déplacement non-réversible ou de modification non-réversible de l'élément de retenue,
58 : dégagement,
60 : extrémité libre de l'élément mobile,
62 : guide,
64 : second moyen de déplacement de l'élément mobile,
71 : vanne de l'état de la technique,
72 : tuyau d'entrée dans la vanne 71,
74 : tuyau de sortie de la vanne 71,
76 : canalisation dédiée au remplissage,
78 : interface de remplissage du circuit de remplissage,
100 : actionneur,
121 : dispositif d'obstruction automatique,
144 : élément mobile,
154 : pompe à air,
221 : dispositif d'obstruction automatique,
244 : élément mobile,
254 : dispositif pyrotechnique,
260 : extrémité libre de l'élément mobile

## Revendications

1. Dispositif d'obstruction automatique (21, 121, 221) destiné à obstruer un circuit de remplissage (40) d'un ou plusieurs réservoir(s) (3) d'un fluide, de manière au moins partiellement étanche au fluide, de façon à empêcher le remplissage du ou des réservoir(s) (3) lorsqu'un événement prédéterminé se produit, le dispositif d'obstruction automatique (21, 121, 221) comprenant :
- au moins un élément mobile (44, 144, 244), apte à être déplacé entre une position de non-obstruction du circuit de remplissage (40), dans laquelle le au moins un élément mobile (44, 144, 244) est apte à être positionné de manière à offrir une résistance au fluide compatible avec le remplissage du réservoir (3), et une position d'obstruction du circuit de remplissage (40), dans laquelle le au moins un élément mobile (44, 144, 244) est apte à être positionné de manière à offrir une résistance au fluide incompatible avec le remplissage du réservoir (3),
- au moins un élément de retenue (52, 144, 244) du au moins un élément mobile (44, 144, 244), apte
- à retenir le au moins un élément mobile (44, 144, 244) en position de non-obstruction, et
- à être déformé ou déplacé de manière à permettre le déplacement du au moins un élément mobile (44, 144, 244) vers la position d'obstruction,
**caractérisé en ce que** le dispositif d'obstruction automatique (21, 121, 221) comprend en outre :
- au moins un premier moyen (54, 154, 254) de déplacement non-réversible ou de modification non-réversible du au moins un élément de retenue (52, 144, 244) de manière à permettre le déplacement du au moins un élément mobile (44, 144, 244) uniquement vers la position d'obstruction,
le au moins un premier moyen (54, 154, 254) de déplacement non-réversible ou de modification non-réversible étant apte à être contrôlé par un dispositif de contrôle (51).

2. Dispositif selon la revendication précédente, dans lequel le au moins un élément mobile (44, 144, 244) est apte à être positionné au moins en partie dans au moins une portion (46) du dispositif d'obstruction automatique (21, 121, 221), portion (46) destinée à être assemblée de manière étanche au circuit de remplissage (40), au moins un orifice (48) est situé dans au moins une paroi (50) de la au moins une portion (46) du dispositif d'obstruction automatique (21, 121, 221), le au moins un orifice (48) est apte :
- à être scellé de manière étanche audit fluide par le au moins un élément de retenue du au moins un élément mobile (44, 144, 244),
et
- à laisser passer le au moins un élément mobile (44, 144, 244) dans la au moins une portion (46), pour que le au moins un élément mobile (44, 144, 244) puisse atteindre la position d'obstruction.

3. Dispositif selon l'une quelconque des revendications précédentes, dans lequel l'événement prédéterminé est une détection d'un défaut de sécurité d'au moins un des réservoirs (3).

4. Dispositif selon l'une quelconque des revendications précédentes, dans lequel le au moins un élément mobile (44, 144, 244) et le au moins un élément de retenue (52, 144, 244) forment un seul et même élément.

5. Circuit de remplissage (40) d'un ou plusieurs réservoir(s) (3) d'un fluide comprenant un dispositif selon l'une quelconque des revendications précédentes.

6. Circuit selon la revendication précédente, dans lequel le ou les réservoir(s) (3) sont connecté(s) de manière étanche au circuit de remplissage (40).

7. Ensemble d'un circuit de remplissage (40) d'un ou plusieurs réservoir(s) (3) d'un fluide selon l'une quelconque des revendications 5 à 6, du ou des réservoirs (3) et d'un dispositif de contrôle (51).

8. Ensemble selon la revendication précédente, dans lequel le dispositif de contrôle (51) est un calculateur.

9. Ensemble selon la revendication précédente comprenant au moins une vanne (1) pour un réservoir (3) d'un fluide, la au moins une vanne (1) comportant :
- au moins une partie d'un capteur (35), pour mesurer au moins un paramètre caractérisant le fluide, la vanne (1) étant apte à recevoir des informations issues d'un calculateur (5), externe à la vanne (1), et
- un calculateur interne (7), le calculateur interne (7) comportant :
un premier moyen (9) d'acquisition configuré pour acquérir des données issues du au moins un capteur,
un moyen (11) de communication apte à communiquer de manière bidirectionnelle avec le calculateur externe (5), et
un moyen (13) de pilotage configuré pour prendre en compte des informations reçues du calculateur externe (5) et des données issues du au moins un capteur pour piloter au moins un actionneur (100) de la vanne (1),
ensemble dans lequel le calculateur est le calculateur interne (7).

10. Procédé de mise en sécurité d'un ou plusieurs réservoir(s) (3) d'un fluide faisant partie d'un ensemble selon l'une quelconque des revendications 7 à 9, comprenant les étapes de :
- prise en compte par le dispositif de contrôle (51) d'une information de défaut de sécurité d'au moins un des réservoirs (3),
- transmission par le dispositif de contrôle (51) d'un ordre d'obstruction au au moins un dispositif d'obstruction automatique (21, 121, 221)
- prise en compte de l'ordre par le au moins un dispositif d'obstruction automatique (21, 121, 221),
- passage du au moins un dispositif d'obstruction automatique (21, 121, 221) de la position de non-obstruction à la position d'obstruction.

## Patentansprüche

1. Automatische Sperrvorrichtung (21, 121, 221) zum Verschließen eines Füllkreislaufs (40) eines Behälters oder mehrerer Behälter (3) mit einem Fluid auf eine zumindest teilweise fluiddichte Weise, um das Füllen des Behälters oder der Behälter (3) zu verhindern, wenn ein vorbestimmtes Ereignis auftritt, wobei die automatische Sperrvorrichtung (21, 121, 221) Folgendes aufweist:
- mindestens ein bewegliches Element (44, 144, 244), das zwischen einer nicht-sperrenden Position des Füllkreislaufs (40), bewegt werden kann, wobei das mindestens eine bewegliche Element (44, 144, 244) so positioniert werden kann, dass es einen Flüssigkeitswiderstand aufweist, der mit dem Füllen des Behälters (3) kompatibel ist, und einer sperrende Position des Füllkreislaufs (40), in der das mindestens eine bewegliche Element (44, 144, 244) ausgestaltet ist, so positioniert zu werden, dass es dem Fluid einen Widerstand bietet, der mit dem Füllen des Behälters (3) inkompatibel ist,
- mindestens ein Halteelement (52, 144, 244) des mindestens einen beweglichen Elements (44, 144, 244), das ausgestaltet ist
- das mindestens eine bewegliche Element (44, 144, 244) in einer nicht sperrenden Position zu halten, und
- verformt oder bewegt zu werden, um die Bewegung des mindestens einen beweglichen Elements (44, 144, 244) in die sperrende Position zu ermöglichen,
**dadurch gekennzeichnet, dass** die automatische Sperrvorrichtung (21, 121, 221) weiterhin aufweist:
- mindestens ein erstes Mittel (54, 154, 254) zum nicht-reversiblen Bewegen oder nicht-reversiblen Modifizieren des mindestens einen Halteelements (52, 144, 244), um die Bewegung des mindestens einen beweglichen Elements (44, 144, 244) nur in die sperrende Position zu ermöglichen,
wobei das mindestens eine erste Mittel (54, 154, 254) zum nicht-reversiblen Bewegen oder nicht-reversiblen Modifizieren ausgestaltet ist, von einer Steuervorrichtung (51) gesteuert zu werden.

2. Vorrichtung nach dem vorhergehenden Anspruch, wobei das mindestens eine bewegliche Element (44, 144, 244) ausgestaltet ist, mindestens teilweise in mindestens einem Abschnitt (46) der automatischen Sperrvorrichtung (21, 121, 221) positioniert zu werden, wobei der Abschnitt (46) dazu bestimmt ist, dicht mit dem Füllkreislauf (40) verbunden zu werden, wobei mindestens eine Öffnung (48) in mindestens einer Wand (50) des mindestens einen Abschnitts (46) der automatischen Sperrvorrichtung (21, 121, 221) angeordnet ist, wobei die mindestens eine Öffnung (48) ausgestaltet ist:
- das mindestens eine Halteelement des mindestens einen beweglichen Elements (44, 144, 244) flüssigkeitsdicht abzudichten, und
- das mindestens eine bewegliche Element (44, 144, 244) durch den mindestens einen Abschnitt (46) hindurchzulassen, so dass das mindestens eine bewegliche Element (44, 144, 244) die sperrende Position erreichen kann.

3. Vorrichtung nach einem der vorhergehenden Ansprüche, wobei das vorbestimmte Ereignis eine Erkennung eines Sicherheitsfehlers von mindestens einem der Behälter (3) ist.

4. Vorrichtung nach einem der vorhergehenden Ansprüche, wobei das mindestens eine bewegliche Element (44, 144, 244) und das mindestens eine Halteelement (52, 144, 244) ein und dasselbe Element bilden.

5. Kreislauf (40) zum Befüllen eines Behälters (3) oder mehrerer Behälter (3) mit einem Fluid, der eine Vorrichtung nach einem der vorhergehenden Ansprüche aufweist.

6. Kreislauf nach dem vorhergehenden Anspruch, bei dem der/die Behälter (3) dicht mit dem Füllkreislauf (40) verbunden ist/sind.

7. Anordnung aus einem Kreislauf (40) zum Befüllen eines Behälters (3) oder mehrerer Behälter (3) mit einem Fluid nach einem der Ansprüche 5 bis 6, dem Behälter oder den Behältern (3) und einer Steuervorrichtung (51).

8. Anordnung nach dem vorhergehenden Anspruch, wobei die Steuervorrichtung (51) ein Rechner ist.

9. Anordnung nach dem vorhergehenden Anspruch, aufweisend mindestens ein Ventil (1) für einen Behälter (3) eines Fluids, wobei das mindestens eine Ventil (1) aufweist:
- mindestens einen Teil eines Sensors (35) zum Messen mindestens eines Parameters, der das Fluid charakterisiert, wobei das Ventil (1) ausgestaltet ist, Informationen von einem Rechner (5) außerhalb des Ventils (1) zu empfangen, und
- einem internen Rechner (7), wobei der interne Rechner (7) Folgendes aufweist:
ein erstes Erfassungsmittel (9), das konfiguriert ist, um Daten zu erfassen, die von mindestens einem Sensor stammen,
ein Kommunikationsmittel (11), das ausgestaltet ist, bidirektional mit dem externen Rechner (5) zu kommunizieren, und
ein Steuerungsmittel (13), das konfiguriert ist, die von dem externen Rechner (5) empfangenen Informationen und die von dem mindestens einen Sensor stammenden Daten zu berücksichtigen, um mindestens einen Aktuator (100) des Ventils (1) zu steuern, wobei der Rechner in dieser Anordnung der interne Rechner (7) ist.

10. Verfahren zum Sichern eines Behälters (3) oder mehrerer Behälter (3) für ein Fluid, die Teil einer Anordnung nach einem der Ansprüche 7 bis 9 sind, mit den folgenden Schritten:
- Berücksichtigung einer Information über einen Sicherheitsfehler von mindestens einem der Behälter (3) durch die Steuervorrichtung (51),
- Übermitteln eines Sperrbefehls durch die Steuereinrichtung (51) an mindestens eine automatische Sperrvorrichtung (21, 121, 221).
- Berücksichtigung des Befehls durch die mindestens eine automatische Sperrvorrichtung (21, 121, 221),
- Umschalten der mindestens einen automatischen Sperrvorrichtung (21, 121, 221) von der nicht-sperrenden Position in die sperrende Position.

## Claims

1. Automatic obstruction device (21, 121, 221) for closing a filling circuit (40) for filling one or more tank(s) (3) with a fluid, in a manner at least partially sealed to the fluid, so as to prevent the filling of the one or more tank(s) (3) when a predetermined event occurs, the automatic obstruction device (21, 121, 221) comprising:
- at least one movable element (44, 144, 244), capable of being moved between a non-obstruction position of the filling circuit (40), in which the at least one movable element (44, 144, 244) is able to be positioned so as to offer a resistance to the fluid compatible with the filling of the tank (3), and an obstruction position of the filling circuit (40), in which the at least one movable element (44, 144, 244) is able to be positioned so as to offer a resistance to the fluid that is incompatible with the filling of the tank (3),
- at least one holding element (52, 144, 244) of the at least one movable element (44, 144, 244), capable
- of holding the at least one movable element (44, 144, 244) in the non-obstruction position, and
- of being deformed or moved so as to allow the movement of the at least one movable element (44, 144, 244) toward the obstruction position,
**characterized In that** the automatic obstruction device (21, 121, 221) further comprises:
- at least a first means (54, 154, 254) of non-reversible movement or of non-reversible modification of the at least one holding element (52, 144, 244) so as to allow the movement of the at least one movable element (44, 144, 244) only toward the obstruction position,
the at least one first means (54, 154, 254) of non-reversible movement or non-reversible modification being controllable by a control device (51).

2. Device according to the preceding claim, wherein the at least one movable element (44, 144, 244) is capable of being positioned at least in part in at least one portion (46) of the automatic obstruction device (21, 121, 221), which portion (46) is intended to be assembled in a sealed manner to the filling circuit (40), at least one orifice (48) is located in at least one wall (50) of the at least one portion (46) of the automatic obstruction device (21, 121, 221) the at least one orifice (48) is capable of:
- being sealed in a fluid-tight manner by the at least one holding element of the at least one movable element (44, 144, 244), and of
- allowing the at least one movable element (44, 144, 244) to enter the at least one portion (46), so that the at least one movable element (44, 144, 244) can reach the obstruction position.

3. Device according to one of the preceding claims, wherein the predetermined event is a detection of a safety defect of at least one of the tanks (3).

4. Device according to one of the preceding claims, wherein the at least one movable element (44, 144, 244) and the at least one holding element (52, 144, 244) form one and the same element.

5. Filling circuit (40) for filling one or more tank(s) (3) with a fluid comprising a device according to one of the preceding claims.

6. Circuit according to the preceding claim, wherein the one or more tank(s) (3) are connected in a leak-tight manner to the filling circuit (40).

7. Assembly of a filling circuit (40) for filling one or more tank(s) (3) with a fluid according to one of claims 5 to 6, the one or more tank(s) (3) and a control device (51).

8. Assembly according to the preceding claim, wherein the control device (51) is a computer.

9. Assembly according to the preceding claim comprising at least one valve (1) for a fluid tank (3), the at least one valve (1) comprising:
- at least one portion of a sensor (35), for measuring at least one parameter characterizing the fluid, the valve (1) being capable of receiving information from a computer (5), external to the valve (1), and
- an internal computer (7), the internal computer (7) comprising:
a first acquisition means (9) configured to acquire data from the at least one sensor,
a communication means (11) capable of communicating bidirectionally with the external computer (5), and
a control means (13) configured to take into account information received from the external computer (5) and data from the at least one sensor for controlling at least one actuator (100) of the valve (1),
in which assembly the computer is the internal computer (7).

10. Method for securing one or more fluid tank(s) (3) forming part of an assembly according to one of claims 7 to 9, comprising the steps of:
- taking into account by the control device (51) of safety defect information of at least one of the tanks (3),
- transmission of an obstruction order by the control device (51) to at least one automatic obstruction device (21, 121, 221),
- taking into account of the order by the at least one automatic obstruction device (21, 121, 221),
- passage of the at least one automatic obstruction device (21, 121, 221) from the non-obstruction position to the obstruction position.
